Europäisches Patentamt

European Patent Office

Office européen des brevets

(11) Veröffentlichungsnummer: **0 307 717 B1**

(12) **EUROPÄISCHE PATENTSCHRIFT**

(45) Veröffentlichungstag der Patentschrift: **07.10.92**

(21) Anmeldenummer: **88114170.9**

(22) Anmeldetag: **31.08.88**

(51) Int. Cl.5: **C07F 9/50**

(51) Int. Cl.5: **C07F 9/50**

(54) Verfahren zur Herstellung von Phoshanen.

(30) Priorität: **18.09.87 DE 3731425**

(43) Veröffentlichungstag der Anmeldung:
**22.03.89 Patentblatt 89/12**

(45) Bekanntmachung des Hinweises auf die
Patenterteilung:
**07.10.92 Patentblatt 92/41**

(84) Benannte Vertragsstaaten:
**BE CH DE FR GB IT LI NL**

(56) Entgegenhaltungen:

**JOURNAL OF SYNTHETIC ORGANIC CHEMI-
STRY, Nr. 3, März 1986, Seiten 198-208; E.N.
TSVETKOV et al.: "A simple synthesis and
some synthetic applications of substituted
phosphide and phosphinite anions"**

**HOUBEN-WEYL, Methoden der Organischen
Chemie, Band XII/1, 1963, Seite 17, herausgegeben von E. MULLER, Georg Thieme Verlag,
Stuttgart, DE**

(73) Patentinhaber: **HOECHST AKTIENGESELL-
SCHAFT
Postfach 80 03 20
W-6230 Frankfurt am Main 80(DE)**

(72) Erfinder: **Stelzer, Ohtmar, Professor Dr.
Riedelstrasse 21
W-5600 Wuppertal(DE)**
Erfinder: **Langhans, Klaus-Peter
Mozartstrasse 38
W-5600 Wuppertal(DE)**
Erfinder: **Svara, Jürgen, Dr.
Mainstrasse 36
W-5000 Köln(DE)**
Erfinder: **Weferling, Norbert, Dr.
Schaesbergstrasse 13
W-5030 Hürth(DE)**

**Beschreibung**

Vorliegende Erfindung betrifft die Herstellung von Phosphanen der allgemeinen Formeln

$R_nPH_{3-n}$     (I)
$H_2P-(CH_2)_m-PH_2$     (II) oder
$(C_6H_5)_2P-CH_2-PH_2$     (III)

in denen R eine geradkettige oder verzweigte Alkylgruppe mit 1 bis 24 C-Atomen oder eine Cycloalkyl-, Benzyl- oder Allylgruppe darstellt, m 2, 3 oder 4 entspricht und n gleich 1 oder 2 ist.

Alkylphosphane erhalten zunehmend technische Bedeutung als Bausteine zur Herstellung höherer phosphororganischer Verbindungen. Es hat daher bislang nicht an Versuchen gefehlt, diese Phosphane zu gewinnen, wobei sehr unterschiedliche Wege beschritten wurden.

So ist u.a. auch betreits die Umsetzung von Phosphan ($PH_3$) mit Methyljodid in Gegenwart von KOH und Dimethylsulfoxid (DMSO) beschrieben worden (William L. Jolly, Inorganic Synthesis, Vol. 11 (1968) Seiten 124 und 126).

Nachteilig an dieser Arbeitsweise ist jedoch, daß sie nur für Arbeiten im Labormaßstab in kleinen Mengen geeignet ist und das eingesetzte Methyljodid sehr teuer, giftig und krebserregend ist. Außerdem ist es erforderlich, KOH in feingemahlener fester Form, suspendiert in DMSO, einzusetzen.

Bekannt ist auch, Phenyl- und Diphenylphosphane in Gegenwart von Dimethylsulfoxid (DMSO) und wäßriger konzentrierter KOH mit Hilfe von Alkylhalogeniden zu den entsprechenden sekundären und tertiären Phosphanen umzusetzen (Synthesis 1986, Seiten 8 bis 22 und Journal of Synthetic Organic Chemistry, März 1986, Seiten 198-208).

Ein Nachteil dieses Verfahrens ist, daß dieser Weg nur zu sekundären und tertiären Phosphanen führt, die zwangsläufig zumindest eine Phenylgruppe als Substituent tragen.

Überraschenderweise wurde nun gefunden, daß man Phosphane der eingangs angeführten allgemeinen Formeln I bis III aus leicht zugänglichem Phosphorwasserstoff ($PH_3$) als Ausgangsprodukt erhält, wenn man Phosphorwasserstoff in Gegenwart sowohl einer 50 bis 70 gew%igen wäßrigen Alkali-Hydroxid-Lösung als auch von Dimethylsulfoxid mit Reagenzien der allgemeinen Formel RX, $X(CH_2)_mX$ oder $(C_6H_5)_2P-CH_2-X$, in denen R und m die angegebenen Bedeutungen haben und X für Chlor oder Brom steht, bei Temperaturen zwischen 0 und 70°C und einem Überdruck von 0 bis 10 bar umsetzt, wobei man pro Mol X jeweils mindestens 1 Mol Alkali-Hydroxid einsetzt.

Vorteilhafte Ausgestaltungen dieses Verfahrens sind z.B., daß die Umsetzung bei Temperaturen von 0 bis 50°C und bei Überdrucken zwischen 0,1 und 8 bar durchgeführt wird.

In den nachfolgenden Tabellen sind als Beispiele Produkte aufgeführt, die durch Umsetzung von Phosphorwasserstoff mit verschiedenen Reagenzien erhalten wurden.

Für die Umsetzung der bei Normalbedingungen flüssigen Halogenverbindungen kann das folgende einfache Verfahren verwendet werden (Methode A, Beispiele 1 bis 6):

Methode A (Beispiele 1 - 6):

In einer Rührapparatur (3-Halskolben, versehen mit Rührer, Tropftrichter, Rückflußkühler) suspendierte man unter starkem Rühren 56 %ige wäßrige KOH-Lösung in DMSO. Durch Spülen mit Stickstoff befreite man das Reaktionssystem von Sauerstoff. Danach wurde $PH_3$ mit einem Überdruck von ca. 100 mbar bis zur Sättigung eingeleitet. In diese Lösung wurde das jeweilige Reagenz getropft. Das Einsetzen der Reaktion konnte leicht an der raschen Absorption erkannt werden, durch Nachdosieren wurde der $PH_3$-Überdruck konstant gehalten. Nebenreaktionen des $PH_3$ wurden nicht beobachtet. Nach Beendigung der Reaktion wurde der Ansatz bei 0°C (1 : 1) mit entgastem Wasser versetzt, wobei Phasentrennung eintrat. Zur besseren Abtrennung der entstandenen Phosphane wurde mit n-Pentan extrahiert. Der Extrakt wurde mit Wasser gewaschen und über Natriumsulfat getrocknet. Das Lösungsmittel wurde bei Normaldruck abdestilliert und der Rückstand fraktioniert.

Die physikalischen Daten der erhaltenen Reaktionsprodukte entsprachen in allen Fällen den aus der Literatur für diese Verbindungen bekannten Werten.

Die Umsetzung von bei Normaltemperatur- und -druck gasförmigen Alkylhalogeniden wird vorteilhafterweise nach Methode B durchgeführt:

Methode B (Beispiele 7 und 8)

In einem 5-1-Laborautoklaven wurden nacheinander bei ca. -40°C die gewünschten Mengen Alkylhalogenid und $PH_3$ einkondensiert. Nach Erwärmen auf Kühlwassertemperatur pumpte man zunächst 500 ml DMSO und danach eine Lösung von 450 g KOH in 250 ml $H_2O$ (ca. 500 ml) hinzu. Mit dem Zudosieren der KOH-Lösung setzte die exotherme Reaktion ein, wobei die Reaktionstemperatur durch Mantelkühlung auf die angegebenen Maximalwerte begrenzt wurde. Der Druck sank während der Dosierzeit der KOH-Lösung (30 Min.) deutlich ab.

Nach Beendigung der Reaktion entspannte man die Gasphase über 3 mit je 250 g Konz. HCl gefüllte Waschflaschen, wobei der Reaktor auf maximal 50°C erwärmt wurde. Methylphosphan (Kp:-17°C) sowie ein Teil des gebildeten Ethylphosphans (Kp:25°C) bzw. Dimethylphosphans (Kp:21°C) wurden dabei quantitativ in Form ihrer HCl-Addukte abgefangen. Nicht absorbierte Restgase (Spülstickstoff, evt. nicht umgesetztes $PH_3$ sowie Methyl- bzw. Ethylchlorid) wurden in einer nachgeschalteten Brennkammer verbrannt. Für die quantitative Analyse der gebildeten Produkte wurden P-Elementaranalysen der HCl-und der DMSO-Lösung in Verbindung mit $^{31}$ P-NMR-Spektroskopie herangezogen.

In den wässrigen Phasen konnte kein Phosphor nachgewiesen werden (< 0,1 %).

Wie die nachfolgende Tabelle 2 zeigt, ist das Arbeiten in wässriger Alkalihyroxid-Lösung in überraschender Weise von Vorteil. Gemäß Vergleichsbeispiel 9 wird bei Einsatz von festem Alklihydroxid eine deutlich schlechtere Umsetzung des $PH_3$ beobachtet. Ein weiterer Nachteil ist ferner der hohe Anteil an unerwünschtem Trimethylphosphanoxid in der DMSO-Phase. Möglicherweise wird unter den in Beispiel 9 beschriebenen Reaktionsbedingungen auch Trimethylphosphan (Kp:40°C) in erheblichem Umfang gebildet, das durch DMSO schnell zum entsprechenden Phosphanoxid oxidiert wird.

# TABELLE 1

| Bei-spiel | Reagenz | g (mmol) | KOH 56 %ige Lö-sung) mmol | DMSO ml | Reaktions-bedingun-gen | Produkt | Ausbeute g(%) |
|---|---|---|---|---|---|---|---|
| 1 | $CH_3-(CH_2)_3-Cl$ | 4,6 (50) | 75 | 150 | 3 h/20°C | $CH_3(CH_2)_3-PH_2$ | 3,7 (82) |
| 2 | $CH_3-(CH_2)_3-Br$ | 6,9 (50) | 75 | 150 | 2 h/20°C | $CH_3-(CH_2)_3-PH_2$ | 3,8 (85) |
| 3 | $CH_3-\overset{\underset{\vert}{Br}}{CH}-CH_2-CH_3$ | 6,9 (50) | 75 | 150 | 6 h/60°C | $CH_3-\overset{\underset{\vert}{PH_2}}{CH}-CH_2-CH_3$ | 3,0 (67) |
| 4 | $CH_2=CH-CH_2-Br$ | 60,5 (500) | 650 | 500 | 1 h/ 0°C | $CH_2=CH-CH_2-PH_2$ | 27,0 (73) |
| 5 | $Br-CH_2-CH_2-CH_2-Br$ | 20,2 (100) | 300 | 500 | 2 h/20°C | $PH_2-(CH_2)_3-PH_2$ | 8,1 (75) |
| 6 | $(C_6H_5)_2PCH_2Cl$ | 23,4 (100) | 300 | 300 | 2 h/20°C | $(C_6H_5)_2PCH_2PH_2$ | 10,4 (45) |

EP 0 307 717 B1

Tabelle 2

| Bei-spiel | PH₃ g (Mol) | Alkyl-halogenid g(Mol) | Reaktions-bedingungen | Produktverteilung HCl-Absorber (Mol %) | Produktverteilung DMSO-Phase (Mol %) | Produktmenge HCl-Absorber (g) | Produktmenge DMSO-Phase (g) | Umsetzungs-grad bez. auf PH₃ |
|---|---|---|---|---|---|---|---|---|
| 7 | 34 (1,0) | CH₃Cl 103 (2,0) | 30' : 15°C 3 h : 25°C Pmax: 5 bar Enddruck: 1,7 bar | CH₃PH₂: 90 (CH₃)₂PH: 10 (CH₃)₃P: <0,2 (CH₃)₄PCl: - | - - >99 - | 37 5,5 <0,2 - | - - 14,7 - | 98 % |
| 8 | 39(1,15) | C₂H₅Cl 160 (1,5) | 5 h: 14 - 24°C Pmax: 4 bar Enddruck: 0,5 bar | C₂H₅PH₂: 100 | 100 | 42 | 25 | 94 % |
| 9 | 39(1,15) | CH₃Cl 103 (2,0) | mit 230 g fester, pulverisierter KOH: 3 h : 20 - 24°C Pmax:7,5 bar Enddruck: 2,2 bar | CH₃PH₂: 70 (CH₃)₂PH: 30 (CH₃)₃P: 0,6 (CH₃)₃P(O): - | - 47 - 53 | 9 5 0,5 - | - 17 - 28 | 76 % |

Vergleichsbeispiel (Beispiel 9)

## Patentansprüche

1. Verfahren zur Herstellung von Phosphanen der allgemeinen Formeln

5

$R_nPH_{3-n}$    (I)
$H_2P-(CH_2)_m-PH_2$    (II) oder
$(C_6H_5)_2P-CH_2-PH_2$    (III)

in denen R eine geradkettige oder verzweigte Alkylgruppe mit 1 bis 24 C-Atomen oder eine Cycloalkyl-, Benzyl-, oder Allylgruppe darstellt, m 2, 3 oder 4 entspricht und n gleich 1 oder 2 ist, <u>dadurch gekennzeichnet</u>, daß man Phosphorwasserstoff in Gewenwart sowohl einer 50 bis 70 gew%igen, <u>wäßrigen</u> Alkali-Hydroxid-Lösung als auch von Dimethylsulfoxid mit Reagenzien der allgemeinen Formeln RX, X(CH$_2$)$_m$X oder (C$_6$H$_5$)$_2$P-CH$_2$-X, in denen R und m die angegebenen Bedeutungen haben und X für Chlor oder Brom steht, bei Temperaturen zwischen 0 und 70°C und einen Überdruck von 0 bis 10 bar umsetzt, wobei man pro Mol X jeweils mindestens 1 Mol Alkali-Hydroxid einsetzt.

2. Verfahren nach Anspruch 1, <u>dadurch gekennzeichnet</u>, daß man die Umsetzung bei Temperaturen von 0 bis 50 °C durchführt.

3. Verfahren nach Anspruch 1 oder 2, <u>dadurch gekennzeichnet</u>, daß man die Umsetzung bei Überdrucken zwischen 0,1 und 8 bar durchführt.

**Claims**

1. A process for the preparation of phosphanes of the formulae

$R_nPH_{3-n}$  (I)
$H_2P-(CH_2)_m-PH_2$    (II) or
$(C_6H_5)_2P-CH_2-PH_2$    (III)

in which R represents a straight-chain or branched alkyl group having 1 to 24 carbon atoms or a cycloalkyl, benzyl or allyl group, m corresponds to 2, 3 or 4 and n is equal to 1 or 2, which comprises reacting phosphane in the presence both of a 50 to 70 % strength by weight aqueous alkali-metal hydroxide solution and also of dimethyl sulfoxide with reagents of the general formulae RX, X(CH$_2$)$_m$X or (C$_6$H$_5$)$_2$P-CH$_2$-X, in which R and m have the meanings mentioned and X stands for chlorine or bromine, at temperatures between 0 and 70°C and a positive pressure of 0 to 10 bar, in which process for each mol of X at least 1 mol of alkali-metal hydroxide is used in each case.

2. The process as claimed in claim 1, wherein the reaction is carried out at temperatures from 0 to 50°C.

3. The process as claimed in claim 1 or 2, wherein the reaction is carried out at positive pressures between 0.1 and 8 bar.

**Revendications**

1. Procédé de préparation des phosphanes de formules générales

$R_nPH_{3-n}$    (I)
$H_2P-(CH_2)_m-PH_2$    (II) ou
$(C_6H_5)_2p-CH_2-PH_2$    (III)

dans lesquelles R représente un groupe alkyle à chaîne droite ou ramifiée en C$_1$-C$_{24}$ ou un groupe cycloalkyle, benzyle ou allyle, m est égal à 2, 3 ou 4 et n à 1 ou 2, caractérisé en ce que l'on fait réagir le phosphure d'hydrogène, en présence à la fois d'une solution aqueuse d'hydroxyde alcalin à une concentration de 50 à 70 % en poids et du diméthylsulfoxyde, avec des réactifs de formules générales RX, X(CH$_2$)$_m$X ou (C$_6$H$_5$)$_2$P-CH$_2$-X dans lesquelles R et m ont les significations indiquées ci-dessus et X représente le chlore ou le brome, à des températures de 0 à 70°C et sous une pression manométrique de 0 à 10 bar en utilisant au moins une mole d'hydroxyde alcalin par mole de X.

2. Procédé selon la revendication 1, caractérisé en ce que l'on effectue la réaction à des températures de 0 à 50°C.

3. Procédé selon la revendication 1 ou 2, caractérisé en ce que l'on effectue la réaction à des pressions manométriques de 0,1 à 8 bar.